# FASCICULE DE BREVET EUROPEEN

(11) **EP 3 049 279 B1**
(45) Date de publication et mention de la délivrance du brevet: **17.10.2018**
(21) Numéro de dépôt: 14767054.1
(22) Date de dépôt: 28.08.2014
(51) Int. Cl.: B60P 1/44, B60P 3/00, B60P 3/07

(54) **BASE LOGISTIQUE MOBILE, PLATEAU DE TRANSPORT DE CHARGE DE VÉHICULE ET VÉHICULE LÉGER POUR LA RÉALISATION D'UNE TELLE BASE**
MOBILE LOGISTIKBASIS, TRANSPORTBETT ZUR LADUNG MIT EINEM MITTEL UND LEICHTES MITTEL ZUR BEREITSTELLUNG SOLCH EINER BASIS
MOBILE LOGISTICS BASE, TRANSPORT BED TO BE LOADED WITH A VEHICLE AND LIGHT VEHICLE FOR PROVIDING SUCH A BASE

(30) Priorité: 26.09.2013 FR 1359272
(43) Date de publication de la demande: 03.08.2016
(73) Titulaire: S.A. Libner, 79400 Saint-Maixent l'Ecole (FR)
(72) Inventeur: LIBNER, Joseph, F-79400 Saivres (FR)
(74) Mandataire: Godineau, Valérie
(86) Numéro de dépôt international: PCT/FR2014/052136
(87) Numéro de publication internationale: WO 2015/044549

(56) Documents cités:
- DE-U1- 9 106 171
- DE-U1-202004 006 066
- US-A1- 2012 020 764

## Description

La présente invention concerne une base logistique mobile, un plateau de transport de charge de véhicule, et un véhicule léger pour la réalisation d'une telle base. Une base logistique mobile, un plateau de transport de charge, et un véhicule léger sont divulgués par DE 91 06 171 U1.

Elle concerne plus particulièrement une base logistique mobile du type comprenant un plateau roulant de transport de charge de véhicule, tel qu'un plateau de camion, de remorque, de semi-remorque, de porteur ou autre, et un véhicule dit léger positionnable sur ledit plateau de transport de charge, ledit véhicule léger comprenant un châssis roulant équipé d'une plate-forme de transport de charge et d'un poste de pilotage.

L'accès des poids-lourds dans les centres de villes pour la livraison ou la prise en charge de marchandises est de plus en plus problématique. À ce jour, aucune solution ne donne satisfaction. Il est connu par exemple d'embarquer un chariot élévateur sur un plateau roulant de camion dont l'arrière peut être équipé d'une plate-forme élévatrice. Toutefois, de tels chariots élévateurs généralement dépourvus de suspension sont conçus pour rouler sur quelques centaines de mètres dans des entrepôts mais ne sont pas conçus pour une circulation sur route.

Un but de la présente invention est donc de proposer une base logistique mobile du type précité, dont la conception permet une livraison, appelée livraison du dernier kilomètre, aisée de la marchandise transportée dans les centres de villes et une prise en charge aisée de marchandises en centre-ville.

Un autre but de la présente invention est de proposer une base logistique mobile dont la conception permet une livraison et une prise en charge des marchandises en centre-ville sans pollution.

À cet effet, l'invention a pour objet une base logistique mobile du type comprenant un plateau roulant de transport de charge de véhicule, tel qu'un plateau de camion, de remorque, de semi-remorque, de porteur ou autre, et un véhicule dit léger positionnable sur ledit plateau de transport de charge, ledit véhicule léger comprenant un châssis roulant équipé d'une plate-forme de transport de charge et d'un poste de pilotage, caractérisée en ce que le plateau de transport de charge comprend deux surfaces porteuses, appelées surface supérieure et surface inférieure, attenantes suivant la direction longitudinale et disposées à des niveaux différents, en ce que la surface inférieure du plateau de transport de charge forme la surface de réception du véhicule léger, en ce que, à l'état positionné du véhicule léger sur la surface inférieure du plateau de transport de charge, le plateau de transport de charge est équipé de moyens d'amenée de la plate-forme de transport de charge du véhicule léger jusqu'à une position dite de transfert dans laquelle la plate-forme de transport de charge du véhicule léger et la surface supérieure du plateau de transport de charge sont sensiblement coplanaires pour un transfert des charges de la plate-forme vers la surface supérieure ou inversement, et en ce que le plateau de transport de charge est équipé de moyens de maintien en position de transfert de ladite plate-forme de transport de charge du véhicule léger.

Le véhicule léger pouvant être un véhicule dont les roues sont reliées au châssis par des suspensions, la présence de moyens de maintien en position de transfert de la plate-forme de transport de charge du véhicule léger permet, notamment en présence de suspensions sur ledit véhicule, de neutraliser lesdites suspensions du véhicule léger, qui tendent à entraîner soit un abaissement de la plate-forme du véhicule léger au fur et à mesure de son chargement, soit une élévation de la plate-forme du véhicule léger au fur et à mesure de son déchargement.

Ainsi, les moyens de maintien sont configurés pour neutraliser en position de transfert au moins partiellement les suspensions du véhicule léger, de sorte qu'un transfert des charges depuis le plateau de transport de charge vers la plate-forme du véhicule léger dans des conditions optimales est garanti.

La présence de moyens de maintien permet donc de garantir une certaine stabilité de la position de transfert.

De préférence, à l'état positionné sur la surface inférieure du plateau de transport de charge, le véhicule léger s'étend avec son axe longitudinal disposé transversalement, de préférence sensiblement orthogonalement, à l'axe longitudinal du plateau de transport de charge.

En variante, à l'état positionné sur la surface inférieure du plateau de transport de charge, le véhicule léger peut s'étendre, avec son axe longitudinal disposé sensiblement parallèlement à l'axe longitudinal du plateau de transport de charge.

De préférence, la surface inférieure du plateau de transport de charge comprend au moins deux voies de circulation aptes à être parcourues chacune par des roues du véhicule léger et les moyens d'amenée et de maintien sont disposés au moins partiellement entre lesdites voies de circulation. Cette solution permet de réduire l'encombrement de l'ensemble.

De préférence, le plateau de transport de charges est équipé de moyens de centrage de la plate-forme du véhicule léger par rapport à la surface inférieure dudit plateau de transport de charge. Ces moyens de centrage permettent de faciliter le transfert de charge.

De préférence, les moyens d'amenée comprennent des moyens d'élévation.

De préférence, à vide et à l'état non sollicité par les moyens de maintien ou d'amenée, c'est-à-dire non entraînée en déplacement par lesdites moyens d'amenée et non maintenue par lesdits moyens de maintien, la plate-forme du véhicule léger, à l'état positionné sur la surface inférieure du plateau de transport de charge s'étend au même niveau ou à un niveau inférieur au niveau de la surface supérieure du plateau de transport de charge.

De préférence, les moyens d'amenée sont, à l'état positionné du véhicule léger sur la surface inférieure du plateau de transport de charge, disposés au moins partiellement sous la plate-forme du véhicule léger.

De préférence, les moyens de maintien de la plate-forme de transport de charge du véhicule léger en position de transfert forment, en position de transfert de ladite plate-forme, une butée anti-abaissement de limitation en déplacement dans le sens d'un abaissement de ladite plate-forme. Cette limitation en déplacement peut s'opérer par un empêchement total en déplacement dans le sens d'un abaissement ou par un empêchement en déplacement dans le sens d'un abaissement au-delà d'une course prédéterminée.

De préférence, lesdits moyens de maintien sont des moyens de maintien temporaires.

En variante, lesdits moyens de maintien peuvent être des moyens de maintien permanents, actifs tant que le véhicule léger est positionné sur la surface inférieure du plateau de transport de charge.

De préférence, les moyens de maintien de la plate-forme de transport de charge du véhicule léger en position de transfert sont, à l'état positionné du véhicule léger sur la surface inférieure du plateau de transport de charge, disposés au moins partiellement sous la plate-forme du véhicule léger.

Les moyens de maintien de la plate-forme de transport de charge du véhicule léger en position de transfert sont des moyens de maintien par le dessous de ladite plate-forme du véhicule. Ces moyens de maintien sont actifs de manière directe, par appui direct sur le dessous de la plate-forme de transport de charge du véhicule léger, et/ou de manière indirecte, par appui sur une partie du châssis roulant du véhicule disposée sous la plate-forme et en liaison rigide avec la plate-forme dudit véhicule.

En variante, les moyens d'amenée auraient pu être réalisés sous forme de moyens d'abaissement de ladite plate-forme et les moyens de maintien sous forme de butée anti-soulèvement de ladite plate-forme. Mais cette solution est complexe à mettre en oeuvre.

De préférence, les moyens d'amenée et de maintien de la plate-forme du véhicule léger en position de transfert sont au moins partiellement communs et comprennent au moins un, de préférence une pluralité de pousseurs disposés au moins partiellement sous la plate-forme du véhicule léger à l'état positionné du véhicule léger sur la surface inférieure du plateau de transport de charge, le ou chaque pousseur, actif par poussée ascendante directe et/ou indirecte sur le dessous de ladite plate-forme, formant, en position de transfert de ladite plate-forme, une butée anti-abaissement de ladite plate-forme.

En variante, les moyens d'amenée et de maintien peuvent être réalisés distincts.

De préférence, le ou chaque pousseur est à actionnement pneumatique.

De préférence, le ou chaque pousseur comprend une partie active, de préférence du genre plot ou pion positionnable en appui par le dessous sur la plate-forme du véhicule léger, et/ou sur une partie de châssis roulant du véhicule léger, en liaison rigide avec la plate-forme, et interposée entre la plate-forme dudit véhicule léger et le pousseur, et des moyens d'entraînement en monte et baisse de ladite partie active dans le sens d'un écartement et d'un rapprochement de la partie de la surface inférieure du plateau de transport de charge réservée à la réception des roues du véhicule léger.

De préférence, les moyens d'entraînement en monte et baisse de la partie active de chaque pousseur sont formés par une table élévatrice, de préférence à coussin d'air, commune à l'ensemble desdites parties actives des pousseurs et portant lesdites parties actives.

De préférence, la partie active du ou d'au moins l'un des pousseurs comprend une extrémité ou surface active d'appui à fonction de centrage de la plate-forme du véhicule léger par rapport à la surface inférieure dudit plateau de transport de charge.

De préférence, le plateau de transport de charges comprend des moyens de bridage de la plate-forme de transport de charge du véhicule léger coopérant, en position de transfert de ladite plate-forme de transport de charge, avec les moyens de maintien et formant, dans ladite position de transfert, une butée dite anti-soulèvement de limitation en déplacement dans le sens d'un soulèvement de la plate-forme du véhicule léger en position d'appui sur la butée anti-abaissement formée par les moyens de maintien.

Ces moyens de bridage sont utiles pendant les phases de circulation de la base mobile, pour éviter des déplacements intempestifs en monte et baisse de la plate-forme du véhicule léger positionné sur la surface inférieure du plateau de transport de charge du véhicule.

De préférence, au moins une partie des moyens de maintien sont montés mobiles en monte et baisse tandis que les moyens de bridage comprennent des crochets pivotants montés mobiles à pivotement entre une position active de limitation en déplacement de la plate-forme du véhicule léger et une position inactive et les moyens de bridage sont couplés en déplacement en monte et baisse avec lesdits moyens de maintien. Il en résulte une simplicité de l'ensemble.

De préférence, la surface supérieure du plateau de transport de charge comprend deux lignes longitudinales de charge et la plate-forme du véhicule léger présente une longueur ou une largeur inférieure ou égale à la largeur d'une ligne de charge.

Chaque ligne longitudinale de charge s'étend donc entre l'axe longitudinal médian et un bord longitudinal du plateau.

De préférence, la plate-forme du véhicule léger et chaque ligne de charge de la surface supérieure du plateau sont équipées de rouleaux escamotables de transport de charge, l'axe des rouleaux du plateau de transport de charge s'étendant sensiblement perpendiculairement à l'axe longitudinal du plateau de transport de charge tandis que l'axe des rouleaux de la plate-forme du véhicule léger s'étend sensiblement parallèlement ou perpendiculairement à l'axe longitudinal de ladite plateforme.

Ainsi, l'axe des rouleaux de la plate-forme du véhicule léger s'étend sensiblement parallèlement à l'axe longitudinal de la plate-forme lorsque, à l'état positionné sur la surface inférieure du plateau de transport de charge, le véhicule léger s'étend avec son axe longitudinal disposé transversalement, de préférence sensiblement orthogonalement à l'axe longitudinal du plateau de transport de charge, tandis que l'axe des rouleaux de la plate-forme du véhicule léger s'étend sensiblement perpendiculairement à l'axe longitudinal de la plate-forme lorsque, à l'état positionné sur la surface inférieure du plateau de transport de charge, le véhicule léger s'étend avec son axe longitudinal disposé sensiblement parallèlement à l'axe longitudinal du plateau de transport de charge.

De préférence, la surface inférieure du plateau de transport de charge est équipée d'au moins une rampe d'accès pivotante montée à pivotement autour d'un axe sensiblement parallèle ou perpendiculaire à l'axe longitudinal dudit plateau de transport de charge.

Ainsi, de préférence, lorsque le véhicule léger s'étend avec son axe longitudinal transversalement à l'axe longitudinal du plateau de transport de charge, la surface inférieure du plateau de transport de charge est équipée de deux rampes d'accès pivotantes disposées de part et d'autre de l'axe longitudinal du plateau de transport de charge et montées à pivotement autour d'un axe sensiblement parallèle à l'axe longitudinal dudit plateau de transport de charge.

Lorsque, à l'état positionné sur la surface inférieure du plateau de transport de charge, le véhicule léger s'étend avec son axe longitudinal disposé sensiblement parallèlement à l'axe longitudinal du plateau de transport de charge, la surface inférieure du plateau de transport de charge est équipée d'une ou deux rampes disposées à l'arrière du plateau de transport de charge et montées à pivotement autour d'un axe sensiblement perpendiculaire à l'axe longitudinal dudit plateau de transport de charge.

De préférence, le véhicule léger est un véhicule électrique équipé de batteries.

De préférence, le plateau de transport de charge est équipé d'une station de charge des batteries.

L'invention a encore pour objet un plateau de transport de charge de véhicule, tel que camion, remorque, semi-remorque, porteur ou autre, du type apte à recevoir un véhicule léger comprenant un châssis roulant équipé d'une plate-forme de transport de charge et d'un poste de pilotage pour la réalisation d'une base logistique mobile, caractérisé en ce que ledit plateau de transport de charge comprend deux surfaces porteuses, appelées surface supérieure et surface inférieure, attenantes suivant la direction longitudinale et disposées à des niveaux différents, en ce que la surface inférieure du plateau de transport de charge qui forme la surface de réception du véhicule léger présente deux zones transversales ou parallèles à l'axe longitudinal du plateau de transport et appelées voies de circulation sur lesquelles les roues du véhicule léger sont aptes à prendre appui, en ce que le plateau de transport de charge est équipé de moyens d'amenée aptes à amener la plate-forme de transport de charge du véhicule léger jusqu'à une position, dite de transfert, dans laquelle la plate-forme de transport de charge et la surface supérieure du plateau de transport de charge sont sensiblement coplanaires pour un transfert des charges de la plate-forme vers la surface supérieure ou inversement et en ce que le plateau de transport de charge est équipé de moyens de maintien en position de transfert aptes à maintenir ladite plate-forme de transport de charge du véhicule léger en position de transfert, ces moyens d'amenée et de maintien présentant au moins une configuration dans laquelle ils s'étendent au moins partiellement au dessus du plan passant par la partie de la surface inférieure du plateau formant la surface d'appui au sol ou de roulement du véhicule léger.

L'invention a encore pour objet un véhicule léger du type comprenant un châssis roulant équipé d'une plate-forme de transport de charge et d'un poste de pilotage, ledit véhicule léger étant positionné sur un plateau de transport de charge du type précité pour la réalisation d'une base logistique du type précité mobile, caractérisé en ce que le dessous de la plate-forme du véhicule léger ou de la partie du châssis roulant du véhicule léger disposée sous la plate-forme et en liaison rigide avec la plate-forme dudit véhicule présente une surface contre laquelle les moyens d'amenée et de maintien en position de transfert du plateau de transport de charge sont en appui.

L'invention a encore pour objet un procédé de chargement/déchargement d'un plateau roulant de transport de charge de véhicule, tel qu'un plateau de camion, de remorque, de semi-remorque, de porteur ou autre, à l'aide d'un véhicule léger formant avec ledit plateau roulant de transport de charge une base logistique mobile du type précité, caractérisé en ce que ledit procédé comprend une étape de positionnement du véhicule léger sur la surface inférieure du plateau de transport de charge et une étape d'amenée et de maintien de la plate-forme de transport de charge du véhicule léger en position de transfert.

Selon une mise en oeuvre préférée du procédé, l'étape d'amenée et de maintien s'opère par élévation de la plate-forme du véhicule léger par exercice d'une poussée ascendante sur le dessous de la plate-forme du véhicule léger et/ou sur le dessous d'une partie du châssis roulant du véhicule léger s'étendant sous la plate-forme et en liaison rigide avec la plate-forme dudit véhicule.

L'invention sera bien comprise à la lecture de la description suivante d'exemples de réalisation, en référence aux dessins annexés dans lesquels :
- la figure 1A représente une vue en perspective d'une base mobile conforme à l'invention, prête au chargement du véhicule léger sur le plateau de transport de charge, à l'état abaissé des moyens d'amenée et de maintien ;
- la figure 1B représente une vue en perspective d'une base mobile conforme à l'invention, prête au chargement du véhicule léger sur le plateau de transport de charge à l'état partiellement soulevé des moyens d'amenée et de maintien pour permettre une visualisation desdits moyens ;
- la figure 2 représente une vue en perspective d'une base mobile conforme à l'invention à l'état chargé du véhicule léger sur le plateau de transport de charge, la plate-forme du véhicule léger étant non sollicitée par les moyens d'amenée et de maintien du plateau de transport de charge ;
- la figure 3 représente une vue en coupe de la figure 2 ;
- la figure 4 représente une vue en perspective d'une base mobile conforme à l'invention à l'état chargé du véhicule léger sur le plateau de transport de charge, la plate-forme du véhicule léger étant sollicitée par les moyens d'amenée et de maintien du plateau de transport de charge ;
- la figure 5 représente une vue en coupe de la figure 4 ;
- la figure 6A représente une vue partielle en perspective de la surface inférieure du plateau de transport de charge avec les moyens d'amenée et de maintien, la platine de liaison des parties actives des pousseurs ayant été omise ;
- la figure 6B représente une vue en perspective de la surface inférieure du plateau de transport de charge avec les moyens d'amenée et de maintien partiellement masqués par la platine de liaison des parties actives des pousseurs ;
- la figure 7 représente une vue schématique en perspective du véhicule léger ;
- les figures 8 à 10 représentent, sous forme de vues schématiques simplifiées, de côté et arrière du véhicule léger positionné sur la surface inférieure du plateau de transport de charge, les différentes phases de fonctionnement des moyens d'amenée et de maintien nécessaires à l'amenée de la plate-forme du véhicule léger en position de transfert.

Comme mentionné ci-dessus, l'invention concerne une base 1 logistique mobile ainsi qu'un plateau 2 de transport de charge et un véhicule 6 léger intégré à une telle base 1.

Cette base 1 logistique est plus particulièrement destinée à permettre la livraison et la prise en charge de marchandises dans des centres-villes où l'accès pour des véhicules lourds est difficile. Il doit être noté que l'on entend généralement par véhicule léger un véhicule dont le poids total en charge est inférieur à deux tonnes.

La base 1 logistique mobile comprend donc un plateau 2 roulant de transport de charge de véhicule positionnable à proximité d'un centre-ville. Ce véhicule peut être un véhicule routier ou ferroviaire. Dans le cas d'un véhicule routier, il peut être indifféremment un camion, une remorque, un semi-remorque, un porteur ou autre.

La base 1 logistique mobile comprend encore un véhicule 6 léger positionnable sur le plateau 2 de transport de charge, pour pouvoir être transporté par ledit plateau jusqu'à proximité d'un centre-ville ou il assure ensuite la livraison entre la base et ledit centre-ville.

Ce véhicule 6 léger comprend un châssis 7 roulant équipé d'une plate-forme 8 de transport de charge et un poste 9 de pilotage.

Dans l'exemple représenté, le véhicule 6 léger est un véhicule électrique qui présente une largeur extérieure de l'ordre de 1,25 mètre, une longueur de l'ordre de 2,40 mètres, une vitesse maximale voisine de 60 km/h et une charge utile de l'ordre de 800 kilos.

Ce véhicule 6 léger est positionnable sur la surface 4 inférieure du plateau 2 de transport de charge qui comprend deux surfaces porteuses appelées surface supérieure 3 et surface inférieure 4. En effet, ces surfaces supérieure 3 et inférieure 4 sont attenantes suivant la direction longitudinale et disposées à des niveaux différents.

La surface inférieure 4 du plateau 2 de transport de charge forme la surface de réception du véhicule 6 léger.

À l'état positionné du véhicule 6 léger sur la surface inférieure 4 du plateau 2 de transport de charge, le plateau 2 de transport de charge est équipé de moyens 10 d'amenée de la plate-forme 8 de transport de charge du véhicule 6 léger jusqu'à une position dite de transfert dans laquelle la plate-forme 8 de transport de charge du véhicule léger et la surface supérieure 3 du plateau 2 de transport de charge sont sensiblement coplanaires pour un transfert des charges de la plate-forme 8 vers la surface supérieure 3 ou inversement.

Le plateau 2 de transport de charge est encore équipé de moyens 11 de maintien en position de transfert de ladite plate-forme 8 de transport de charge du véhicule 6 léger.

Dans l'exemple représenté aux figures, à l'état positionné sur la surface inférieure 4 du plateau 2 de transport de charge, le véhicule 6 léger s'étend avec son axe longitudinal disposé transversalement, de préférence sensiblement orthogonalement, à l'axe longitudinal du plateau 2 de transport de charge.

La surface inférieure 4 du plateau de transport de charge est quant à elle équipée de deux rampes 21 d'accès pivotantes disposées de part et d'autre de l'axe longitudinal du plateau 2 de transport de charge et montées à pivotement autour d'un axe sensiblement parallèle à l'axe longitudinal dudit plateau 2 de transport de charge.

À l'état pivoté en direction du sol, ces rampes 21 permettent le chargement et le déchargement du véhicule 6 léger du plateau 2 de transport de charge.

La surface 3 supérieure du plateau de transport de charge comprend quant à elle deux lignes 18 longitudinales de charge, chaque ligne 18 de charge s'étend entre l'axe longitudinal médian et un bord longitudinal du plateau.

La plate-forme 8 du véhicule 6 léger présente une longueur inférieure ou égale à la largeur d'une ligne 18 de charge.

La plate-forme 8 du véhicule léger et chaque ligne 18 de charge de la surface 3 supérieure du plateau sont équipées de rouleaux 20, 19 escamotables de transport de charge.

L'axe des rouleaux 19 du plateau de transport de charge s'étend sensiblement perpendiculairement à l'axe longitudinal du plateau 2 de transport de charge, tandis que l'axe des rouleaux 20 de la plate-forme 8 du véhicule léger s'étend sensiblement parallèlement à l'axe longitudinal de ladite plate-forme 8.

La présence de ces rouleaux facilite le transfert des charges de la surface supérieure du plateau de transport de charge vers la plate-forme du véhicule léger et inversement.

L'escamotage ou la sortie des rouleaux s'opère généralement pneumatiquement par un circuit pneumatique positionné sous les rouleaux.

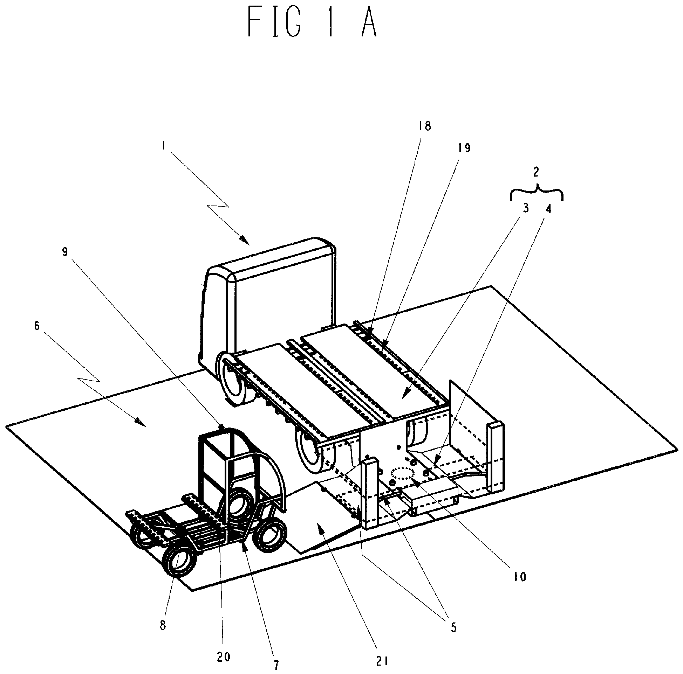

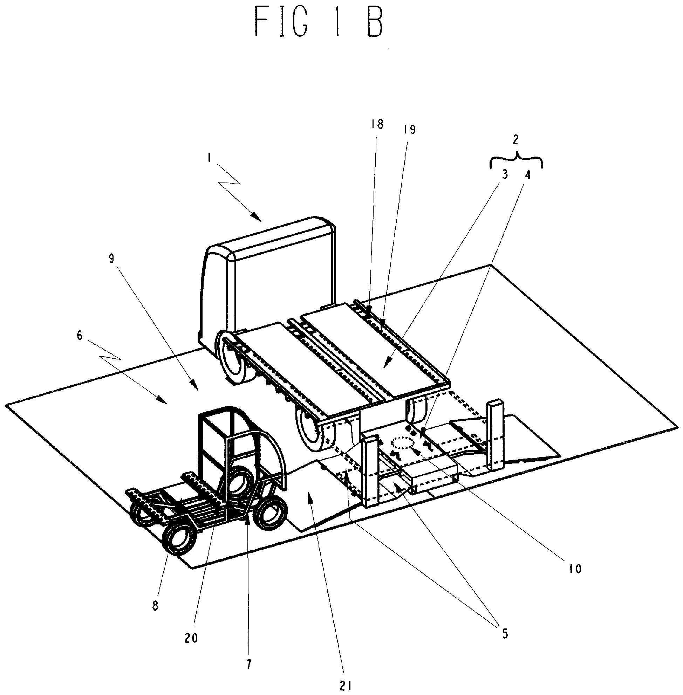

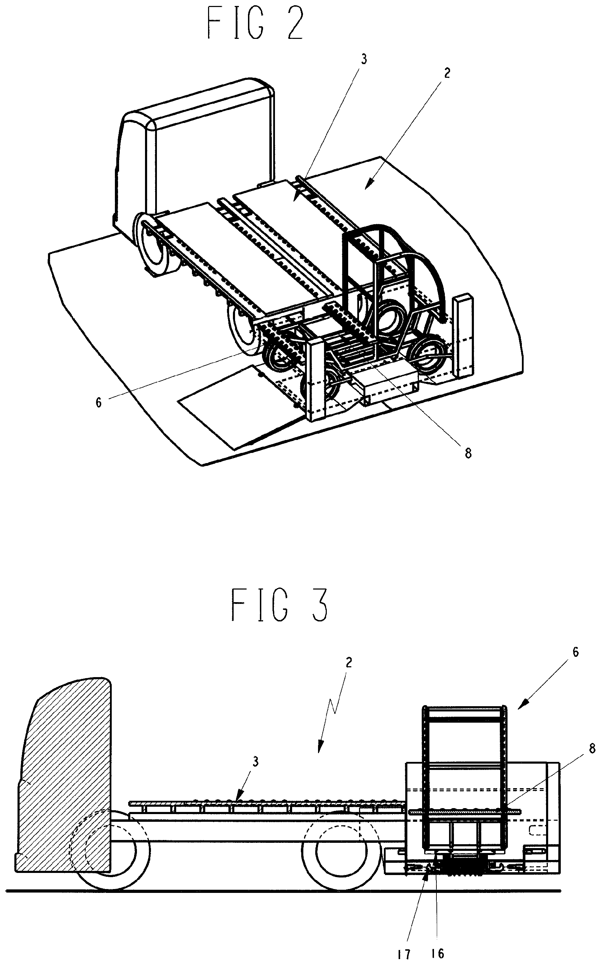

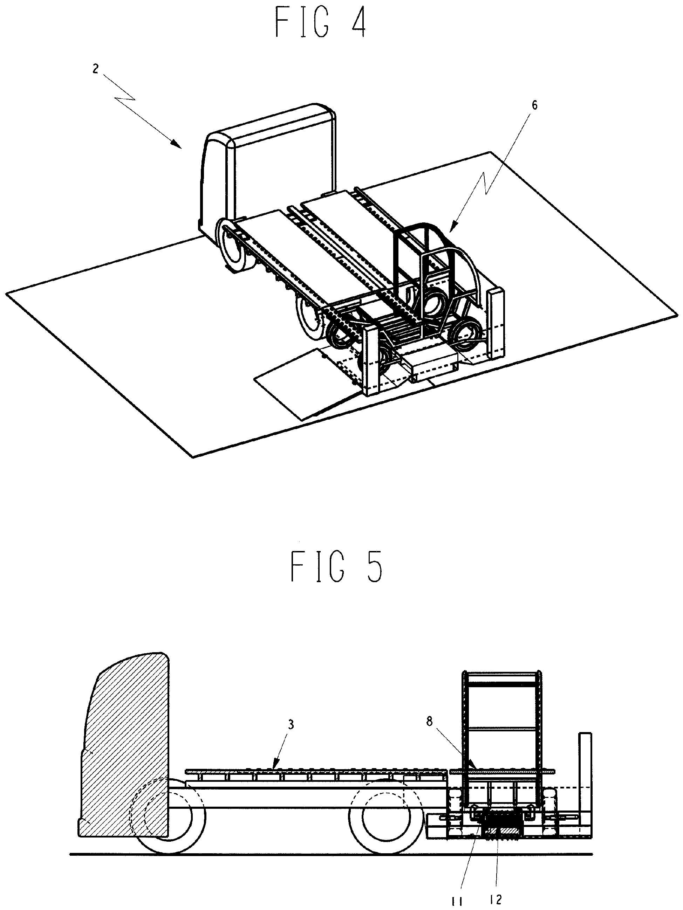

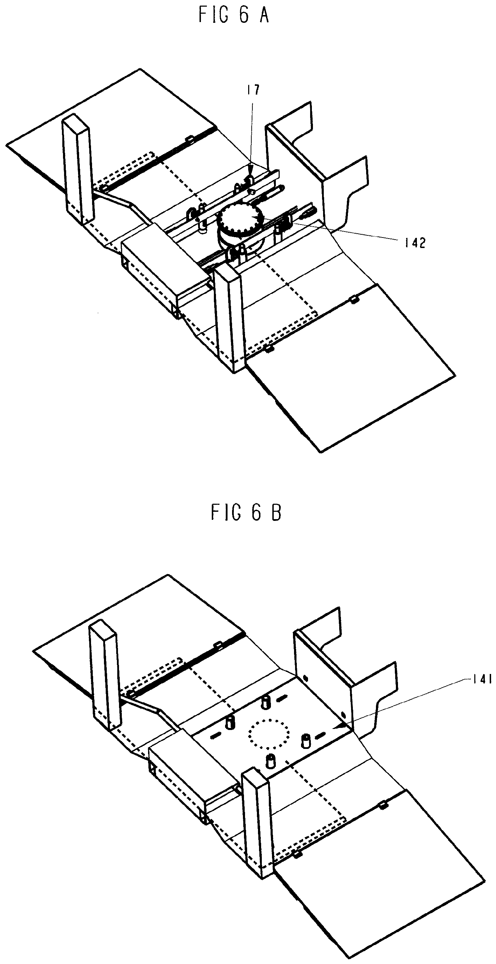

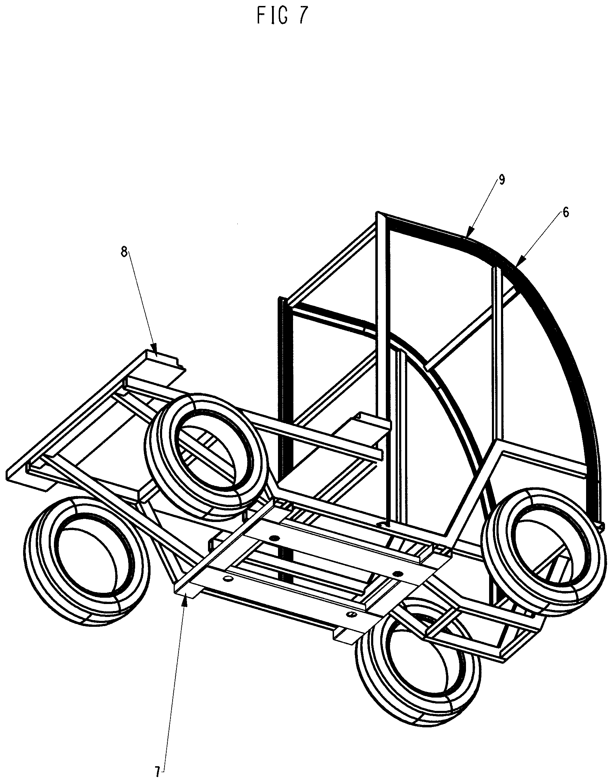

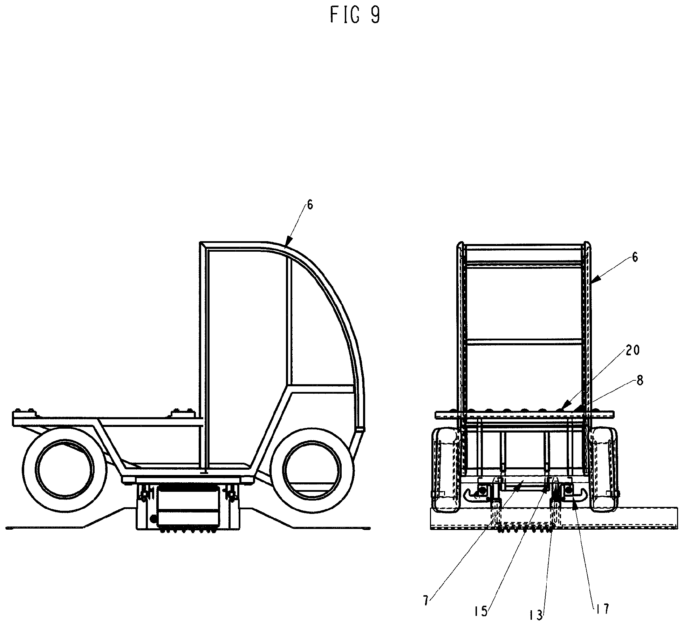

Dans l'exemple représenté aux figures 1 à 10, la surface inférieure 4 du plateau 2 de transport de charge comprend deux voies 5 de circulation sensiblement parallèles, aptes à être parcourues chacune par les roues du véhicule 6 léger. Lesdites voies 5 de circulation s'étendent sensiblement orthogonalement à l'axe longitudinal du plateau 2 de transport de charge.

Dans cet exemple, les moyens d'amenée 10 et de maintien 11 sont disposés au moins partiellement entre lesdites voies 5 de circulation.

Les moyens 10 d'amenée comprennent des moyens d'élévation de la plate-forme 8 du véhicule 6 léger qui, à l'état positionné du véhicule 6 léger sur la surface inférieure 4 du plateau 2 de transport de charge, sont disposés au moins partiellement sous la plate-forme 8 du véhicule 6 léger.

Les moyens 11 de maintien de la plate-forme 8 de transport de charge du véhicule 6 léger en position de transfert forment, en position de transfert de ladite plate-forme 8, une butée anti-abaissement de limitation en déplacement dans le sens d'un abaissement de ladite plate-forme 8 et sont, à l'état positionné du véhicule 6 léger sur la surface inférieure 4 du plateau de transport de charge, disposés au moins partiellement sous la plate-forme 8 du véhicule léger.

Dans l'exemple représenté, les moyens 10 d'amenée et 11 de maintien de la plate-forme 8 du véhicule 6 léger en position de transfert sont au moins partiellement communs et comprennent une pluralité de pousseurs 12, en l'occurrence quatre pousseurs 12, disposés au moins partiellement sous la plate-forme du véhicule léger à l'état positionné du véhicule léger sur la surface inférieure 4 du plateau 2 de transport de charge.

Chaque pousseur 12 est actif par poussée ascendante directe et/ou indirecte sur le dessous de ladite plate-forme. Chaque pousseur forme, en position de transfert de ladite plate-forme 8, une butée anti-abaissement de ladite plate-forme.

Dans les exemples représentés, chaque pousseur 12 est à actionnement pneumatique et est, pour son fonctionnement, raccordé au circuit pneumatique alimentant le système d'escamotage des rouleaux. Chaque pousseur 12 comprend une partie 13 active formée ici par un plot. Ce plot est positionnable en appui par le dessous directement sur la plate-forme ou sur une partie de châssis 7 roulant du véhicule 6 léger en liaison rigide avec la plate-forme 8 et interposée entre la plate-forme 8 dudit véhicule 6 léger et le pousseur 12, comme cela est représenté.

Les plots prennent ici appui sur les longerons du châssis du véhicule léger, ces longerons étant munis d'évidements à l'intérieur desquels l'extrémité libre des plots vient prendre place.

Ces extrémités libres des plots constitutifs des parties actives de pousseurs sont coniques et exercent donc une fonction de centrage du véhicule 6 léger par rapport à la surface 4 inférieure du plateau 2 de transport de charge.

Ces extrémités libres des plots forment donc des moyens 15 de centrage de la plate-forme 8 du véhicule léger par rapport à la surface 4 inférieure dudit plateau de transport de charge.

Pour le déplacement de leur partie 13 active, lesdits pousseurs 12 comprennent des moyens 14 d'entraînement en monte et baisse de ladite partie 13 active dans le sens d'un écartement et d'un rapprochement de la partie de la surface inférieure 4 du plateau de transport de charge réservée à la réception des roues du véhicule 6 léger.

Dans l'exemple représenté, les moyens 14 d'entraînement en monte et baisse de la partie active de chaque pousseur sont formés par une table 141 élévatrice à coussin d'air 142 commune à l'ensemble des parties 13 actives des pousseurs et portant lesdites parties 13 actives.

Chaque partie active coulisse au cours de son déplacement en monte et baisse, à l'intérieur d'un fourreau stationnaire, fendu longitudinalement et s'étendant depuis la surface inférieure du plateau de transport.

Ce fourreau permet un guidage en déplacement de la partie active du pousseur.

Le plateau de la table élévatrice s'étend dans un plan sensiblement parallèle à la surface d'appui des roues du véhicule 6 léger de la surface inférieure du plateau 2 de transport de charge et se déplace sensiblement parallèlement à lui-même.

Bien évidemment, d'autres modes de réalisation des moyens d'élévation et de maintien peuvent être envisagés. Ainsi, les moyens d'élévation et de maintien tels que décrits ci-dessus auraient pu être remplacés par de simples vérins à gaz ou électriques combinés avec des moyens de butée.

Indépendamment de leur mode de réalisation, les moyens 10 d'amenée permettent une élévation de la plate-forme du véhicule léger jusqu'à sa position de transfert, position dans laquelle les roues du véhicule léger sont ou non encore en contact avec le sol.

Les moyens 11 de maintien empêchent ou limitent, dans cette position de la plate-forme du véhicule léger, un abaissement de la plate-forme du véhicule léger, notamment sous l'effet de charges positionnées sur ladite plate-forme du véhicule 6 léger.

Ce soulèvement de la plate-forme du véhicule léger peut également entraîner une détente des suspensions, ce qui rend inactives les suspensions du véhicule léger lorsqu'elles existent, de sorte qu'un déplacement de la plate-forme dans le sens d'un soulèvement sous l'action de l'enlèvement d'une charge à la surface de ladite plate-forme du véhicule léger n'est généralement pas observé.

Pour garantir un tel comportement de la plate-forme du véhicule léger, le plateau 2 de transport de charge comprend des moyens 16 de bridage de la plate-forme 8 de transport de charge du véhicule 6 léger coopérant en position de transfert de ladite plate-forme 8 de transport de charge avec les moyens 11 de maintien et formant, dans ladite position de transfert, une butée anti-soulèvement ou de limitation en déplacement dans le sens d'un soulèvement de la plate-forme 8 du véhicule 6 léger en position d'appui sur la butée anti-abaissement formée par les moyens 11 de maintien.

Ces moyens 16 de bridage comprennent des crochets 17 pivotants montés mobiles à pivotement entre une position active de limitation en déplacement de la plate-forme 8 du véhicule 6 léger et une position inactive et les moyens 16 de bridage sont couplés en déplacement en monte et baisse avec lesdits moyens 11 de maintien.

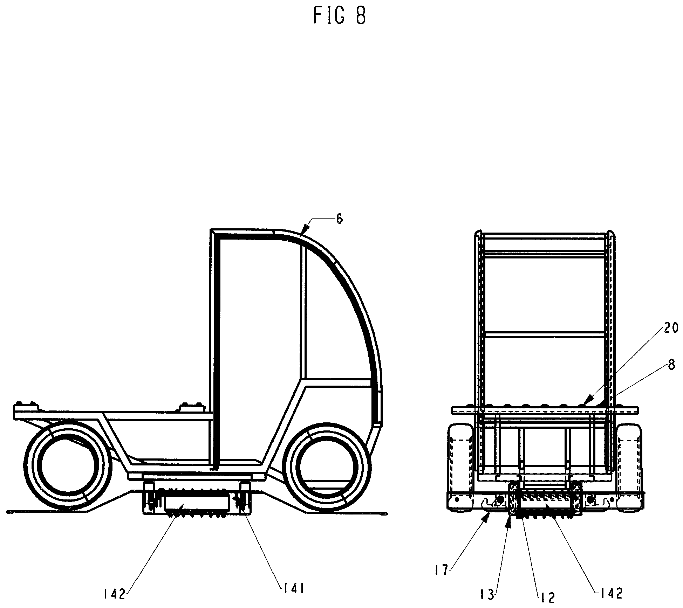

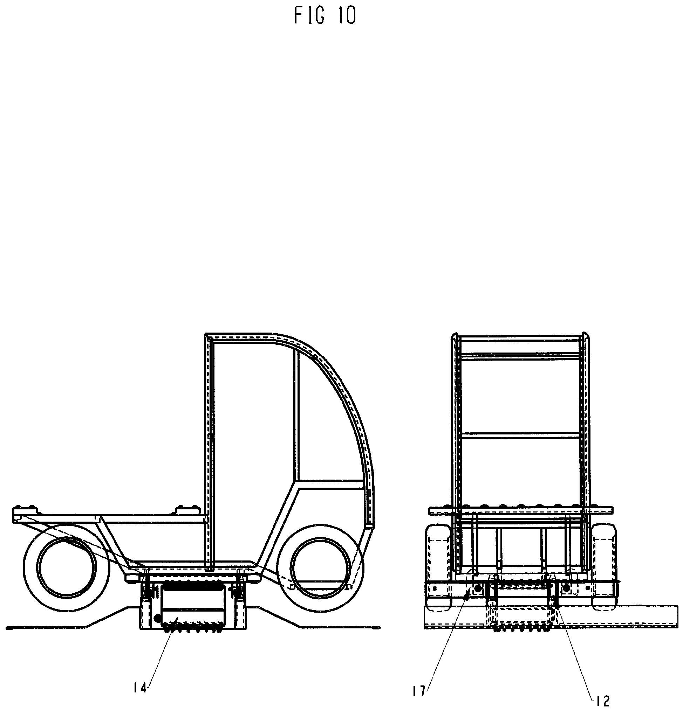

Dans l'exemple représenté aux figures 8 à 10, les crochets 17, au nombre de quatre, sont montés à pivotement autour d'un axe perpendiculaire à l'axe longitudinal des voies de circulation de la surface inférieure du plateau 2 de transport de charge et sont aptes à passer d'une position couchée inactive à une position dressée active dans laquelle lesdits crochets 17 viennent en prise avec les bords longitudinaux des longerons du châssis 7 roulant du véhicule 6 léger comme illustré à la figure 10.

Dans cette position, les longerons du châssis 7 roulant du véhicule 6 léger sont pris en sandwich entre deux butées formées respectivement par les moyens 11 de maintien et les moyens 16 de bridage.

Comme ces longerons sont en liaison rigide avec la plate-forme 8 du véhicule léger, tout déplacement en monte et baisse de la plate-forme du véhicule léger est empêché. On note que les crochets 17 sont embarqués sur le plateau de la table qui porte les parties actives des éléments pousseurs, de sorte que l'élévation de ladite table 141 entraîne simultanément l'élévation des crochets 17.

Pour le passage de la position inactive à la position active, ces crochets 17 peuvent être commandés en déplacement à pivotement par l'intermédiaire d'un actionneur, de préférence pneumatique, tel qu'un vérin. Ces crochets peuvent également être équipés de moyens, tels qu'un ressort de rappel en position active, pour garantir un bridage de la plate-forme 8 du véhicule 6 léger, y compris en cas de défaillance des actionneurs.

Ces moyens 16 de bridage sont également utiles lors des phases de circulation du plateau 2 de transport de charge sur lequel le véhicule léger est embarqué, pour éviter que la plate-forme du véhicule léger "saute" ou oscille, notamment lors d'un déplacement du plateau de transport de charge sur un sol inégal.

La figure 8 illustre donc l'étape d'amenée du véhicule 6 léger sur la surface inférieure du plateau de transport de charge. Les moyens d'amenée et de maintien sont en position basse. Le coussin d'air est en position de plus faible encombrement.

La plate-forme du véhicule léger est ensuite soulevée par les moyens 10 d'amenée et 11 de maintien, jusqu'à la position de transfert, où elle ne peut plus s'abaisser, sous l'action d'une charge, en raison de la présence des moyens 11 de maintien. Cette phase de soulèvement est provoquée par le gonflage du coussin d'air, qui entraîne en déplacement la partie active des pousseurs. On note que dans cette position de transfert, le véhicule léger est ici représenté avec ses roues ne touchant plus le sol. Dans cette position de transfert, les crochets 17 sont activés (voir figure 10) pour assurer un bridage de la plate-forme du véhicule léger.

Une fois l'opération de transfert de charge achevée et le plateau 2 de transport de charge arrivé au site de débarquement du véhicule léger, les crochets 17 sont inactivés, la plate-forme 8 du véhicule 6 léger est abaissée par descente des moyens 10 d'amenée et 11 de maintien jusqu'à une position dans laquelle les moyens 10 d'amenée et 11 de maintien ne sont plus en contact direct ou indirect avec la plate-forme 8 du véhicule léger.

Le véhicule léger peut alors être débarqué du plateau de transport de charge, à l'aide de la ou de l'une des rampes 21 pivotantes équipant le plateau de transport de charge.

Dans une variante de réalisation de l'invention non illustrée, plus particulièrement destinée aux semi-remorques, à l'état positionné sur la surface inférieure 4 du plateau 2 de transport de charge, le véhicule 6 léger s'étend avec son axe longitudinal disposé parallèlement à l'axe longitudinal du plateau 2 de transport de charge et présente donc une largeur inférieure ou égale à la largeur d'une ligne 18 de charge de la surface 3 supérieure du plateau 2 de transport de charge.

Ce véhicule à chargement par l'arrière peut se positionner sur la surface inférieure du plateau 2 de transport de charge, dans le prolongement de l'une ou l'autre des lignes de charge de la surface supérieure du plateau de transport de charge.

Cette variante nécessite d'équiper chaque emplacement de réception du véhicule léger de la surface inférieure de moyens d'amenée et de maintien. Il en résulte un surcoût de l'installation.

Au niveau de chaque emplacement de réception, les moyens 10 d'amenée et 11 de maintien fonctionnent de manière similaire à ce qui a été décrit ci-dessus.

Il aurait également pu être imaginé de réaliser les moyens d'amenée et de maintien sous forme d'éléments permanents, ces moyens 10 d'amenée et 11 de maintien se présentant sous forme de rails disposés au-dessus de la surface inférieure du plateau de transport de charge et formant des rampes de guidage lors de l'embarquement du véhicule léger sur le plateau de transport de charge pour entraîner la plate-forme dans une position dans laquelle tout abaissement de ladite plate-forme à l'état positionné sur la surface porteuse du plateau de transport de charge est empêché.

## Revendications

1. Base (1) logistique mobile du type comprenant un plateau (2) roulant de transport de charge de véhicule, tel qu'un plateau de camion, de remorque, de semi-remorque, de porteur, ou autre, et un véhicule (6), dit léger, positionnable sur ledit plateau (2) de transport de charge, ledit véhicule (6) léger comprenant un châssis (7) roulant équipé d'une plate-forme (8) de transport de charge et d'un poste (9) de pilotage, le plateau (2) de transport de charge comprenant deux surfaces porteuses, appelées surface supérieure (3) et surface inférieure (4), attenantes suivant la direction longitudinale et disposées à des niveaux différents, la surface inférieure (4) du plateau (2) de transport de charge formant la surface de réception du véhicule léger,
**caractérisé en ce que**, à l'état positionné du véhicule (6) léger sur la surface inférieure (4) du plateau (2) de transport de charge, le plateau (2) de transport de charge est équipé de moyens (10) d'amenée de la plate-forme (8) de transport de charge du véhicule léger jusqu'à une position dite de transfert dans laquelle la plate-forme (8) de transport de charge du véhicule léger et la surface supérieure (3) du plateau (2) de transport de charge sont sensiblement coplanaires pour un transfert des charges de la plate-forme (8) vers la surface supérieure (3) ou inversement, et **en ce que** le plateau (2) de transport de charge est équipé de moyens (11) de maintien en position de transfert de ladite plate-forme (8) de transport de charge du véhicule (6) léger.

2. Base (1) selon la revendication 1,
**caractérisée en ce que**, à l'état positionné sur la surface inférieure (4) du plateau (2) de transport de charge, le véhicule (6) léger s'étend avec son axe longitudinal disposé transversalement, de préférence sensiblement orthogonalement, à l'axe longitudinal du plateau (2) de transport de charge.

3. Base (1) selon l'une des revendications précédentes,
**caractérisée en ce que** la surface inférieure (4) du plateau (2) de transport de charge comprend au moins deux voies (5) de circulation aptes à être parcourues chacune par des roues du véhicule (6) léger et **en ce que** les moyens d'amenée (10) et de maintien (11) sont disposés au moins partiellement entre lesdites voies (5) de circulation.

4. Base (1) selon l'une des revendications précédentes,
**caractérisée en ce que** le plateau (2) de transport de charges est équipé de moyens (15) de centrage de la plate-forme (8) du véhicule léger par rapport à la surface (4) inférieure dudit plateau de transport de charge.

5. Base (1) selon l'une des revendications précédentes,
**caractérisée en ce que** les moyens (10) d'amenée comprennent des moyens d'élévation de la plate-forme (8) du véhicule (6) léger qui, à l'état positionné du véhicule (6) léger sur la surface inférieure (4) du plateau (2) de transport de charge, sont, de préférence, disposés au moins partiellement sous la plate-forme (8) du véhicule (6) léger.

6. Base (1) selon l'une des revendications précédentes,
**caractérisée en ce que** les moyens (11) de maintien de la plate-forme (8) de transport de charge du véhicule (6) léger en position de transfert sont, à l'état positionné du véhicule (6) léger sur la surface inférieure (4) du plateau de transport de charge, disposés de préférence au moins partiellement sous la plate-forme (8) du véhicule (6) léger et forment, en position de transfert de ladite plate-forme (8), une butée anti-abaissement de limitation en déplacement dans le sens d'un abaissement de ladite plate-forme (8).

7. Base (1) selon l'une des revendications précédentes,
**caractérisée en ce que** les moyens (10) d'amenée et (11) de maintien de la plate-forme (8) du véhicule (6) léger en position de transfert sont au moins partiellement communs et comprennent au moins un, de préférence une pluralité de pousseurs (12) disposés au moins partiellement sous la plate-forme du véhicule léger à l'état positionné du véhicule léger sur la surface inférieure (4) du plateau (2) de transport de charge, le ou chaque pousseur (12), actif par poussée ascendante directe et/ou indirecte sur le dessous de ladite plate-forme, formant, en position de transfert de ladite plate-forme (8), une butée anti-abaissement de ladite plate-forme.

8. Base (1) selon la revendication 7,
**caractérisée en ce que** le ou chaque pousseur (12) est à actionnement pneumatique.

9. Base (1) selon l'une des revendications 7 ou 8,
**caractérisée en ce que** le ou chaque pousseur (12) comprend une partie (13) active, de préférence du genre plot ou pion positionnable en appui par le dessous sur la plate-forme (8) du véhicule (6) léger, et/ou sur une partie de châssis roulant du véhicule (6) léger, en liaison rigide avec la plate-forme (8), et interposée entre la plate-forme (8) dudit véhicule (6) léger et le pousseur (12), et des moyens (14) d'entraînement en monte et baisse de ladite partie (13) active dans le sens d'un écartement et d'un rapprochement de la partie de la surface inférieure (4) du plateau de transport de charge réservée à la réception des roues du véhicule (6) léger.

10. Base (1) selon la revendication 9,
**caractérisée en ce que** les moyens (14) d'entraînement en monte et baisse de la partie active de chaque pousseur sont formés par une table élévatrice (141), de préférence à coussin d'air (142), commune à l'ensemble desdites parties (13) actives des pousseurs et portant lesdites parties (13) actives,

11. Base (1) selon l'une des revendications 9 ou 10,
**caractérisée en ce que** la partie (13) active du ou d'au moins l'un des pousseurs (12) comprend une extrémité ou surface active d'appui à fonction de centrage de la plate-forme (8) du véhicule (6) léger par rapport à la surface (4) inférieure dudit plateau (2) de transport de charge.

12. Base (1) selon l'une des revendications précédentes,
**caractérisée en ce que** le plateau (2) de transport de charges comprend des moyens (16) de bridage de la plate-forme (8) de transport de charge du véhicule (6) léger coopérant, en position de transfert de ladite plate-forme (8) de transport de charge, avec les moyens (11) de maintien et formant, dans ladite position de transfert, une butée dite anti-soulèvement de limitation en déplacement dans le sens d'un soulèvement de la plate-forme (8) du véhicule (6) léger en position d'appui sur la butée anti abaissement formée par les moyens (11) de maintien.

13. Base (1) selon la revendication 12,
**caractérisée en ce qu'**au moins une partie des moyens (11) de maintien sont montés mobiles en monte et baisse, **en ce que** les moyens (16) de bridage comprennent des crochets (17) pivotants montés mobiles à pivotement entre une position active de limitation en déplacement de la plate-forme (8) du véhicule (6) léger et une position inactive, et **en ce que** les moyens (16) de bridage sont couplés en déplacement en monte et baisse avec lesdits moyens (11) de maintien.

14. Base (1) selon l'une des revendications précédentes,
**caractérisée en ce que** la surface (3) supérieure du plateau (2) de transport de charge comprend deux lignes (18) longitudinales de charge et **en ce que** la plate-forme (8) du véhicule léger (6) présente une longueur ou une largeur inférieure ou égale à la largeur d'une ligne (18) de charge.

15. Base (1) selon la revendication 14,
**caractérisée en ce que** la plate-forme (8) du véhicule léger (6) et chaque ligne (18) de charge de la surface (3) supérieure du plateau sont équipées de rouleaux (20, 19) escamotables de transport de charges, l'axe des rouleaux (19) du plateau (2) de transport de charge s'étendant sensiblement perpendiculairement à l'axe longitudinal du plateau (2) de transport de charge tandis que l'axe des rouleaux de la plate-forme (8) du véhicule (6) léger s'étend sensiblement parallèlement ou perpendiculairement à l'axe longitudinal de ladite plateforme (8).

16. Base (1) selon l'une des revendications précédentes,
**caractérisée en ce que** la surface inférieure (4) du plateau de transport de charge est équipée d'au moins une rampe (21) d'accès pivotante montée à pivotement autour d'un axe sensiblement parallèle ou perpendiculaire à l'axe longitudinal dudit plateau (2) de transport de charge.

17. Plateau (2) de transport de charge de véhicule, tel que camion, remorque ou semi-remorque, porteur ou autre, du type apte à recevoir un véhicule (6) léger comprenant un châssis (7) roulant équipé d'une plate-forme (8) de transport de charge et d'un poste (9) de pilotage, pour la réalisation d'une base (1) logistique mobile conforme à l'une des revendications 1 à 16,
ledit plateau (2) de transport de charge comprenant deux surfaces porteuses, appelées surface supérieure (3) et surface inférieure (4), attenantes suivant la direction longitudinale et disposées à des niveaux différents, **caractérisé en ce que** la surface inférieure (4) du plateau (2) de transport de charge qui forme la surface de réception du véhicule (6) léger présente deux zones transversales ou parallèles à l'axe longitudinal du plateau (2) de transport et appelées voies (5) de circulation sur lesquelles les roues du véhicule (6) léger sont aptes à prendre appui, **en ce que** le plateau (2) de transport de charge est équipé de moyens (10) d'amenée aptes à amener la plate-forme (8) de transport de charge du véhicule (6) léger jusqu'à une position, dite de transfert, dans laquelle la plate-forme (8) de transport de charge et la surface supérieure (3) du plateau (2) de transport de charge sont sensiblement coplanaires pour un transfert des charges de la plate-forme (8) vers la surface supérieure (3) ou inversement et **en ce que** le plateau (2) de transport de charge est équipé de moyens (11) de maintien en position de transfert aptes à maintenir ladite plate-forme (8) de transport de charge du véhicule (6) léger en position de transfert, ces moyens d'amenée (10) et de maintien (11) présentant au moins une configuration dans laquelle ils s'étendent au moins partiellement au dessus du plan passant par la partie de la surface inférieure (4) du plateau (2) formant la surface d'appui au sol ou de roulement du véhicule (6) léger.

18. Véhicule (6) léger du type comprenant un châssis (7) roulant équipé d'une plate-forme (8) de transport de charge et d'un poste (9) de pilotage, **caractérisé en ce que** ledit véhicule (6) léger est positionné sur un plateau (2) de transport de charge conforme à la revendication 17 pour la réalisation d'une base (1) logistique mobile conforme à l'une des revendications 1 à 16,
et **en ce que** le dessous de la plate-forme (8) du véhicule (6) léger ou de la partie du châssis (7) roulant du véhicule (6) léger disposée sous la plate-forme (8) et en liaison rigide avec la plate-forme (8) dudit véhicule (6) présente une surface contre laquelle les moyens d'amenée (10) et de maintien (11) en position de transfert du plateau de transport de charge sont en appui.

19. Procédé de chargement/déchargement d'un plateau (2) roulant de transport de charge de véhicule, tel qu'un plateau de camion, de remorque, de semi-remorque, de porteur ou autre, à l'aide d'un véhicule (6) léger formant avec ledit plateau (2) roulant de transport de charge une base (1) logistique mobile du type conforme à l'une des revendications 1 à 16,
**caractérisé en ce que** ledit procédé comprend une étape de positionnement du véhicule (6) léger sur la surface inférieure (4) du plateau (2) de transport de charge et une étape d'amenée et de maintien de la plate-forme (8) de transport de charge du véhicule (6) léger en position de transfert.

20. Procédé selon la revendication 19,
**caractérisé en ce que** l'étape d'amenée et de maintien s'opère par élévation de la plate-forme (8) du véhicule (6) léger par exercice d'une poussée ascendante sur le dessous de la plate-forme (8) du véhicule (6) léger et/ou sur le dessous d'une partie du châssis (7) roulant du véhicule (6) léger s'étendant sous la plate-forme (8) et en liaison rigide avec la plate-forme (8) dudit véhicule (6) léger.

## Patentansprüche

1. Mobile Logistikbasis (1) des Typs, eine rollende Lasttransportplatte (2) eines Fahrzeugs wie eine Platte eines Lkw, Anhängers, Sattelaufliegers, Trägers oder Sonstigen und ein Leichtfahrzeug (6), das auf der Lasttransportplatte (2) positionierbar ist, umfassend, wobei das Leichtfahrzeug (6) ein rollendes Fahrgestell (7) umfasst, das mit einer Lasttransportplattform (8) und einem Steuerstand (9) ausgestattet ist,
wobei die Lasttransportplatte (2) zwei tragende Flächen, als obere Fläche (3) und untere Fläche (4) bezeichnet, die gemäß der Längsrichtung aneinander angrenzen und auf verschiedenen Ebenen angeordnet sind, umfasst, dass die untere Fläche (4) der Lasttransportplatte (2) die Empfangsfläche des Leichtfahrzeugs bildet, **dadurch gekennzeichnet, dass** die Lasttransportplatte (2) im auf der unteren Fläche (4) der Lasttransportplatte (2) positionierten Zustand des Leichtfahrzeugs (6) mit Zuführmitteln (10) der Lasttransportplattform (8) des Leichtfahrzeugs bis in eine sogenannte Transferposition ausgestattet ist, in welcher die Lasttransportplattform (8) des Leichtfahrzeugs und die obere Fläche (3) der Lasttransportplatte (2) für einen Lastentransfer der Lasten von der Plattform (8) auf die obere Fläche (3) oder umgekehrt etwa koplanar sind und dass die Lasttransportplatte (2) mit Haltemitteln (11) der Lasttransportplattform (8) des Leichtfahrzeugs (6) in Transferposition ausgestattet ist.

2. Basis (1) nach Anspruch 1,
**dadurch gekennzeichnet, dass** sich das Leichtfahrzeug (6) in auf der unteren Fläche (4) der Lasttransportplatte (2) positioniertem Zustand mit seiner transversal angeordneten Längsachse vorzugsweise etwa orthogonal zur Längsachse der Lasttransportplatte (2) erstreckt.

3. Basis (1) nach einem der vorangehenden Ansprüche,
**dadurch gekennzeichnet, dass** die untere Fläche (4) der Lasttransportplatte (2) mindestens zwei Zirkulationswege (5) umfasst, die jeweils imstande sind, von den Rädern des Leichtfahrzeugs (6) befahren zu werden und dass die Zuführ- (10) und Haltemittel (11) mindestens teilweise zwischen den Zirkulationswegen (5) angeordnet sind.

4. Basis (1) nach einem der vorangehenden Ansprüche,
**dadurch gekennzeichnet, dass** die Lasttransportplatte (2) mit Zentriermitteln (15) der Plattform (8) des Leichtfahrzeugs in Bezug auf die untere Fläche (4) der Lasttransportplatte ausgestattet ist.

5. Basis (1) nach einem der vorangehenden Ansprüche,
**dadurch gekennzeichnet, dass** die Zuführmittel (10) Hubmittel der Plattform (8) des Leichtfahrzeugs (6) umfassen, die im auf der unteren Fläche (4) der Lasttransportplatte (2) positionierten Zustand des Leichtfahrzeugs (6) vorzugsweise mindestens teilweise unter der Plattform (8) des Leichtfahrzeugs (6) angeordnet sind.

6. Basis (1) nach einem der vorangehenden Ansprüche,
**dadurch gekennzeichnet, dass** die Haltemittel (11) der Lasttransportplattform (8) des Leichtfahrzeugs (6) in Transferposition im auf der unteren Fläche (4) der Lasttransportplatte (2) positionierten Zustand des Leichtfahrzeugs (6) vorzugsweise mindestens teilweise unter der Plattform (8) des Leichtfahrzeugs (6) angeordnet sind und in Transferposition der Plattform (8) einen Anti-Absenk-Anschlag zur Begrenzung der Verlagerung in Richtung eines Ansenkens der Plattform (8) bilden.

7. Basis (1) nach einem der vorangehenden Ansprüche,
**dadurch gekennzeichnet, dass** die Zuführ- (10) und Haltemittel (11) der Plattform (8) des Leichtfahrzeugs (6) in Transferposition mindestens teilweise gemeinsam sind und mindestens einen, vorzugsweise eine Vielzahl von Drückern (12) umfassen, die im auf der unteren Fläche (4) der Lasttransportplatte (2) positionierten Zustand des Leichtfahrzeugs (6) mindestens teilweise unter der Plattform des Leichtfahrzeugs angeordnet sind, wobei der oder jeder Drücker (12), der durch direktes und/oder indirektes Hochdrücken auf die Unterseite der Plattform aktiv ist, in Transferposition des Plattform (8) einen Anti-Absenk-Anschlag der Plattform bildet.

8. Basis (1) nach Anspruch 7,
**dadurch gekennzeichnet, dass** der oder jeder Drücker (12) pneumatisch betätigt wird.

9. Basis (1) nach einem der Ansprüche 7 oder 8,
**dadurch gekennzeichnet, dass** der oder jeder Drücker (12) einen aktiven Teil (13), vorzugsweise in der Art Klotz oder Stift, positionierbar in Abstützung unterhalb der Plattform (8) des Leichtfahrzeugs (6) und/oder auf einem Teil des rollenden Fahrgestells des Leichtfahrzeugs (6) in starrer Verbindung mit der Plattform (8) und angeordnet zwischen der Plattform (8) des Leichtfahrzeugs (6) und dem Drücker (12) und Antriebsmittel (14) nach oben und unten des aktiven Teils (13) in Richtung einer Beabstandung und einer Annäherung des Teils der unteren Fläche (4) der Lasttransportplatte, die für den Empfang der Räder des Leichtfahrzeugs (6) vorbehalten ist, umfasst.

10. Basis (1) nach Anspruch 9,
**dadurch gekennzeichnet, dass** die Antriebsmittel (14) nach oben und unten des aktiven Teils jedes Drückers von einem Hubtisch (141), vorzugsweise mit Luftkissen (142), gebildet sind, der allen aktiven Teilen (13) der Drücker gemeinsam ist und die aktiven Teile (13) trägt.

11. Basis (1) nach einem der Ansprüche 9 oder 10,
**dadurch gekennzeichnet, dass** der aktive Teil (13) des oder von mindestens einem der Drücker (12) ein aktives Ende oder Stützfläche mit Zentrierfunktion der Plattform (8) des Leichtfahrzeugs (6) in Bezug auf die untere Fläche (4) der Lasttransportplatte (2) umfasst.

12. Basis (1) nach einem der vorangehenden Ansprüche,
**dadurch gekennzeichnet, dass** die Lasttransportplatte (2) Spannmittel (16) der Lasttransportplattform (8) des Leichtfahrzeugs (6) umfasst, die in Transferposition der Lasttransportplattform (8) mit den Haltemitteln (11) zusammenwirken und in der Transferposition einen Anti-Anhebe-Anschlag zur Begrenzung in Richtung eines Anhebens der Plattform (8) des Leichtfahrzeugs (6) in Stützposition über den von den Haltemitteln (11) gebildeten Anti-Absenk-Anschlag bilden.

13. Basis (1) nach Anspruch 12,
**dadurch gekennzeichnet, dass** mindestens ein Teil der Haltemittel (11) nach oben und unten mobil montiert ist, dass die Spannmittel (16) Schwenkhaken (17) umfassen, die zwischen einer aktiven Position der Begrenzung der Verlagerung der Plattform (8) des Leichtfahrzeugs (6) und einer inaktiven Position schwenkend mobil montiert sind und dass die Spannmittel (16) in Verlagerung mit den Haltemitteln (11) nach oben und unten gekoppelt sind.

14. Basis (1) nach einem der vorangehenden Ansprüche,
**dadurch gekennzeichnet, dass** die obere Fläche (3) der Lasttransportplatte (2) zwei Längslastlinien (18) umfasst und dass die Plattform (8) des Leichtfahrzeugs (6) eine Länge oder eine Breite aufweist, die kleiner oder gleich der Breite einer Ladelinie (18) ist.

15. Basis (1) nach Anspruch 14,
**dadurch gekennzeichnet, dass** die Plattform (8) des Leichtfahrzeugs (6) und jede Ladelinie (18) der oberen Fläche (3) der Platte mit einziehbaren Lasttransportrollen (20, 19) ausgestattet sind, wobei sich die Achse der Rollen (19) der Lasttransportplatte (2) etwa senkrecht zur Längsachse der Lasttransportplatte (2) erstreckt, wogegen sich die Achse der Rollen der Plattform (8) des Leichtfahrzeugs (6) etwa parallel oder senkrecht zur Längsachse der Plattform (8) erstreckt.

16. Basis (1) nach einem der vorangehenden Ansprüche,
**dadurch gekennzeichnet, dass** die untere Fläche (4) der Lasttransportplatte mit mindestens einer schwenkenden Zugangsrampe (21) ausgestattet ist, die um eine zur Längsachse der Lasttransportplatte (2) etwa parallele oder senkrechte Achse schwenkend montiert ist.

17. Lasttransportplatte (2) eines Fahrzeugs wie Lkw, Anhänger oder Sattelauflieger, Träger oder sonstiges, des Typs, der imstande ist, ein Leichtfahrzeug (6), umfassend ein rollendes Fahrgestell (7), ausgestattet mit einer Lasttransportplattform (8) und einem Steuerstand (9), für die Herstellung einer mobilen Logistikbasis (1) nach einem der Ansprüche 1 bis 16 zu empfangen,
wobei die Lasttransportplatte (2) zwei tragende Flächen, als obere Fläche (3) und untere Fläche (4) bezeichnet, die gemäß der Längsrichtung aneinander angrenzen und auf verschiedenen Ebenen angeordnet sind, umfasst, **dadurch gekennzeichnet, dass** die untere Fläche (4) der Lasttransportplatte (2), welche die Empfangsfläche des Leichtfahrzeugs (6) bildet, zwei Zonen aufweist, die zur Längsachse der Transportplatte (2) transversal oder parallel sind und als Zirkulationswege (5) bezeichnet werden, auf denen die Räder des Leichtfahrzeugs (6) imstande sind, sich abzustützen, dass die Lasttransportplatte (2) mit Zuführmitteln (10) ausgestattet ist, die imstande sind, die Lasttransportplattform (8) des Leichtfahrzeugs (6) bis zu einer Transferposition zu führen, in welcher die Lasttransportplattform (8) und die obere Fläche (3) der Lasttransportplatte (2) für einen Lastentransfer von der Plattform (8) auf die obere Fläche (3) oder umgekehrt etwa koplanar sind und dass die Lasttransportplatte (2) mit Haltemitteln (11) in Transferposition ausgestattet ist, die imstande sind, die Lasttransportplattform (8) des Leichtfahrzeugs (6) in Transferposition zu halten, wobei diese Zuführ- (10) und Haltemittel (11) mindestens eine Konfiguration aufweisen, in welcher sie sich mindestens teilweise über der Ebene erstrecken, die durch den Teil der unteren Fläche (4) der Platte (2) verläuft, welche die Abstützfläche auf dem Boden oder zum Fahren des Leichtfahrzeugs (6) bildet.

18. Leichtfahrzeug (6) des Typs, umfassend ein rollendes Fahrgestell (7), ausgestattet mit einer Lasttransportplattform (8) und einem Steuerstand (9), **dadurch gekennzeichnet, dass** das Leichtfahrzeug (6) auf der Lasttransportplatte (2) nach Anspruch 17 für die Bildung einer mobilen Logistikbasis (1) nach einem der Ansprüche 1 bis 16 positioniert ist,
und dass die Unterseite der Plattform (8) des Leichtfahrzeugs (6) oder des Teils des rollenden Fahrgestells (7) des Leichtfahrzeugs (6), der unter der Plattform (8) angeordnet und in starrer Verbindung mit der Plattform (8) des Fahrzeugs (6) ist, eine Fläche aufweist, auf der sich die Zuführ- (10) und Haltemittel (11) in Transferposition der Lasttransportplatte abstützen.

19. Verfahren zum Beladen/Entladen einer rollenden Lasttransportplatte (2) eines Fahrzeugs wie einer Platte eines Lkw, eines Anhängers, eines Sattelaufliegers, eines Trägers oder sonstigen mit Hilfe eines Leichtfahrzeugs (6), das mit der rollenden Lasttransportplatte (2) eine mobile Logistikbasis (1) des Typs nach einem der Ansprüche 1 bis 16 bildet,
**dadurch gekennzeichnet, dass** das Verfahren einen Schritt der Positionierung des Leichtfahrzeugs (6) auf der unteren Fläche (4) der Lasttransportplatte (2) und einen Zuführ- und Halteschritt der Lasttransportplattform (8) des Leichtfahrzeugs (6) in Transferposition umfasst.

20. Verfahren nach Anspruch 19,
**dadurch gekennzeichnet, dass** der Schritt des Zuführens und des Haltens durch Anheben der Plattform (8) des Leichtfahrzeugs (6) durch Ausüben eines Hochdrückens auf die Unterseite der Plattform (8) des Leichtfahrzeugs (6) und/oder auf die Unterseite eines Teils des rollenden Fahrgestells (7) des Leichtfahrzeugs (6) erfolgt, das sich unter der Plattform (8) erstreckt und in starrer Verbindung mit der Plattform (8) des Leichtfahrzeugs (6) ist.

## Claims

1. A mobile logistics base (1) of the type comprising a wheeled transport bed (2) to be loaded with a vehicle, such as a truck, trailer, semi-trailer, straight truck or other bed type, and a vehicle (6), called light vehicle, able to be positioned on said vehicle transport bed (2), said light vehicle (6) comprising a rolling chassis (7) equipped with a transport platform (8) and a control station (9),
the transport bed (2) comprising two support surfaces, called upper surface (3) and lower surface (4), adjacent in the longitudinal direction and positioned at different levels, in that the lower surface (4) of the transport bed (2) forming the surface for receiving the light vehicle,
**characterized in that**, in the state with the light vehicle (6) positioned on the lower surface (4) of the transport bed (2), the transport bed (2) is equipped with means (10) for bringing the platform (8) for transporting a light vehicle to a so-called transfer position in which the platform (8) for transporting a light vehicle and the upper surface (3) of the transport bed (2) are substantially coplanar in order to transfer loads from the platform (8) to the upper surface (3) or the reverse, and **in that** the transport bed (2) is equipped with means (11) for keeping said platform (8) for transporting the light vehicle (6) in the transfer position.

2. The base (1) according to claim 1,
**characterized in that**, in the state positioned on the lower surface (4) of the transport bed (2), the light vehicle (6) extends with its longitudinal axis positioned transversely, preferably substantially orthogonally, to the longitudinal axis of the transport bed (2).

3. The base (1) according to one of the preceding claims,
**characterized in that** the lower surface (4) of the transport bed (2) comprises at least two lanes (5) each able to be traveled by wheels of the light vehicle (6) and **in that** the bringing (10) and keeping (11) means are positioned at least partially between said lanes (5).

4. The base (1) according to one of the preceding claims,
**characterized in that** the transport bed (2) is equipped with means (15) for centering the platform (8) of the light vehicle relative to the lower surface (4) of said transport bed.

5. The base (1) according to one of the preceding claims,
**characterized in that** the bringing means (10) comprise means for raising the platform (8) of the light vehicle (6), which, in the state with said light vehicle (6) positioned on the lower surface (4) of the transport bed (2), are preferably positioned at least partially below the platform (8) of the light vehicle (6).

6. The base (1) according to one of the preceding claims,
**characterized in that** the means (11) for keeping the platform (8) for transporting the light vehicle (6) in the transfer position are, in the state with the light vehicle (6) positioned on the lower surface (4) of the transport bed, preferably positioned at least partially below the platform (8) of the light vehicle (6) and form, in the transfer position of said platform (8), an anti-lowering stop limiting the movement in the direction of a lowering of said platform (8).

7. The base (1) according to one of the preceding claims,
**characterized in that** the means for bringing (10) and keeping (11) the platform (8) of the light vehicle (6) in the transfer position are at least partially shared and comprise at least one, preferably a plurality of pushers (12) positioned at least partially below the platform of the light vehicle in the state with the light vehicle positioned on the lower surface (4) of the transport bed (2), the or each pusher (12), active by direct and/or indirect pushing on the bottom of said platform, forming, in the transfer position of said platform (8), an anti-lowering stop of said platform.

8. The base (1) according to claim 7,
**characterized in that** the or each pusher (12) is actuated pneumatically.

9. The base (1) according to one of claims 7 or 8,
**characterized in that** the or each pusher (12) comprises an active part (13), preferably of the stud or pin type, able to be positioned bearing from underneath on the platform (8) of the light vehicle (6), and/or on a rolling chassis part of the light vehicle (6), rigidly connected with platform (8), and interposed between the platform (8) of said light vehicle (6) and the pusher (12), and means (14) for driving the raising and lowering of said active part (13) in the direction moving the part away from and closer to the lower surface (4) of the transport bed reserved for receiving wheels of the light vehicle (6).

10. The base (1) according to claim 9,
**characterized in that** the means (14) for driving the raising and lowering of the active part of each pusher are formed by a lift table (141), preferably with an air cushion (142), shared by all of said active parts (13) of the pushers and carrying said active parts (13).

11. The base (1) according to one of claims 9 or 10,
**characterized in that** the active part (13) of the or at least one of the pushers (12) comprises an active bearing end or surface with a centering function of the platform (8) of the light vehicle (6) relative to the lower surface (4) of said transport bed (2).

12. The base (1) according to one of the preceding claims,
**characterized in that** the transport bed (2) comprises flanging means (16) of the platform (8) for transporting the light vehicle (6) cooperating, in the transfer position of said transport platform (8), with the keeping means (11) and forming, in said transfer position, a so-called anti-lifting stop limiting the movement in the direction of a lifting of the platform (8) of the light vehicle (6) in a bearing position on the anti-lowering stop formed by the keeping means (11).

13. The base (1) according to claim 12,
**characterized in that** at least part of the keeping means (11) are mounted upwardly and downwardly movably, **in that** the flanging means (16) comprise pivoting hooks (17) mounted pivotably between an active position limiting the movement of the platform (8) of the light vehicle (6) and an inactive position, and **in that** the flanging means (16) are coupled in upward and downward movement with said keeping means (11).

14. The base (1) according to one of the preceding claims,
**characterized in that** the upper surface (3) of the transport bed (2) comprises two longitudinal load lines (18) and **in that** the platform (8) of the light vehicle (6) has a length or a width smaller than or equal to the width of a load line (18).

15. The base (1) according to claim 14,
**characterized in that** the platform (8) of the light vehicle (6) and each load line (18) of the upper surface (3) of the bed are equipped with retractable transport rollers (20, 19), the axis of the rollers (19) of the transport bed (2) extending substantially perpendicular to the longitudinal axis of the transport bed (2), while the axis of the rollers of the platform (8) of the light vehicle (6) extends substantially parallel or perpendicular to the longitudinal axis of said platform (8).

16. The base (1) according to one of the preceding claims,
**characterized in that** the lower surface (4) of the transport bed is equipped with at least one pivoting access ramp (21) mounted pivoting around an axis substantially parallel or perpendicular to the longitudinal axis of said transport bed (2).

17. A transport bed (2) to be loaded with a vehicle, such as a truck, trailer, semi-trailer, straight truck or other bed type, of the type able to receive a light vehicle (6) comprising a rolling chassis (7) equipped with a transport platform (8) and a control station (9), for providing a mobile logistics space (1) according to one of claims 1 to 16,
said transport bed (2) comprising two support surfaces, called upper surface (3) and lower surface (4), adjacent in the longitudinal direction and positioned at different levels,
**characterized in that** the lower surface (4) of the transport bed (2), which forms the surface for receiving the light vehicle (6), has two zones transverse or parallel to the longitudinal axis of the transport bed (2) and called lanes (5) on which the wheels of the light vehicle (6) are able to bear, **in that** the transport bed (2) is equipped with bringing means (10) able to bring the platform (8) for transporting the light vehicle (6) to a position, called transfer position, in which the transport platform (8) and the upper surface (3) of the transport bed (2) are substantially coplanar in order to transfer loads from the platform (8) to the upper surface (3) or vice versa, and **in that** the transport bed (2) is equipped with means (11) for keeping in the transfer position able to keep said platform (8) for transporting the light vehicle (6) in the transfer position, these bringing (10) and keeping (11) means having at least one configuration in which they extend at least partially above the plane passing through the part of the lower surface (4) of the bed (2) forming the ground bearing or rolling surface of the light vehicle (6).

18. A light vehicle (6) of the type comprising a rolling chassis (7) equipped with a transport platform (8) and a control station (9),
**characterized in that** said light vehicle (6) is positioned on a transport bed (2) according to claim 17 for producing a mobile logistics base according to one of claims 1 to 16,
and **in that** the bottom of the platform (8) of the light vehicle (6) or of the part of the rolling chassis (7) of the light vehicle (6) positioned below the platform (8) and rigidly connected with the platform (8) of said vehicle (6) has a surface against which the means for bringing (10) and keeping (11) in the transfer position of the transport bed are bearing.

19. A method for loading/unloading a rolling bed (2) for transporting a vehicle, such as a truck, trailer, semi-trailer, straight truck or other bed, using a light vehicle (6) forming, with said rolling transport bed (2), a mobile logistics base (1) of the type according to one of claims 1 to 16,
**characterized in that** said method comprises a step for positioning the light vehicle (6) on the lower surface (4) of the transport bed (2) and a step for bringing and keeping the platform (8) for transporting the light vehicle (6) in the transfer position.

20. The method according to claim 19,
**characterized in that** the bringing and keeping step is carried out by raising the platform (8) of the light vehicle (6) by exerting upward thrust on the bottom of the platform (8) of the light vehicle (6) and/or on the bottom of a part of the rolling chassis (7) of the light vehicle (6) extending below the platform (8) and rigidly connected with the platform (8) of said light vehicle (6).
